## Europäisches Patentamt
## European Patent Office
## Office européen des brevets

(19)

(11) Veröffentlichungsnummer: **0 171 018**
**B1**

(12) **EUROPÄISCHE PATENTSCHRIFT**

(45) Veröffentlichungstag der Patentschrift:
**02.11.88**

(21) Anmeldenummer: **85109532.3**

(22) Anmeldetag: **29.07.85**

(51) Int. Cl.⁴: **C 04 B 28/14,** C 04 B 38/10 //
(C04B28/14, 24:42)

(54) **Verfahren zur Herstellung wasserabweisender Formkörper aus Gips.**

(30) Priorität: **09.08.84 DE 3429311**

(43) Veröffentlichungstag der Anmeldung:
**12.02.86 Patentblatt 86/7**

(45) Bekanntmachung des Hinweises auf die Patenterteilung:
**02.11.88 Patentblatt 88/44**

(84) Benannte Vertragsstaaten:
**AT BE CH DE FR LI NL SE**

(56) Entgegenhaltungen:
**DE-A-2 534 427**
**DE-A-2 740 049**
**DE-B-1 223 287**
**FR-A-2 153 579**
**LU-A-53 317**

(73) Patentinhaber: **BAYER AG, Konzernverwaltung RP Patentabteilung, D-5090 Leverkusen 1 Bayerwerk (DE)**

(72) Erfinder: **Steinbach, Hans-Horst, Dr., Im Birkelshof 1, D-5060 Bergisch Gladbach 2 (DE)**
Erfinder: **Rieder, Matthias, Scheurener Strasse 68c, D-5068 Odenthal (DE)**

LIBER, STOCKHOLM 1988

**Beschreibung**

Die Vorliegende Erfindung betrifft ein Verfahren zur Herstellung wasserabweisender Formkörper aus Gipspulver, insbesondere zur Herstellung von porösen Gipskartonplatten, bei dem dem Gipsbrei ein Polyalkylwasserstoffsiloxan zugesetzt wird.

Es ist bekannt, Gipserzeugnisse, wie z. B. Gipskartonplatten, die ein starkes Wasseraufnahmevermögen zeigen, wasserabweisend auszurüsten unter Verwendung von Organosiliciumverbindungen. Die Hydrophobierung kann nachträglich nach Fertigstellung der Gipserzeugnisse vorgenommen werden, wird aber in den meisten Fallen durch Beigabe geeigneter Organosiliciumkonfektionierungen zu den Gipsbestandteilen durchgeführt. Dieses Verfahren wird auch als Massehydrophobierung bezeichnet.

Im Rahmen dieser Massehydrophobierung werden heute vornehmlich wäßrige Emulsionen auf Basis von Polyalkylwasserstoffsiloxanen verwendet (DE-PS-1 223 287). Auch ist bekannt, Polyalkylwasserstoffsiloxane in reiner Form anzuwenden (DE-OS-2 740 049). Im letzteren Fall ist es in der Praxis aber unmöglich, das Öl aufgrund seiner Wasserunlöslichkeit im wäßrigen Gipsbrei, bestehend aus Anmachwasser und Gipspulver, zu verteilen. Als Folge davon werden trotz des Zusatzes von Organosiliciumverbindungen keine wasserabweisenden Eigenschaften erhalten. In der Praxis stellt die Verwendung von Polyalkylwasserstoffsiloxanen die wesentlich wirtschaftlichere Form dar; bislang gab es aber kein Verfahren, das Öl gleichmäßig im Gipsbrei zu verteilen.

Es besteht daher das Bedürfnis nach einem geeigneten Verfahren zur wasserabweisenden Ausrüstung von porösen Gipskartonplatten im Rahmen einer Massehydrophobierung unter Verwendung von Polyalkylwasserstoffsiloxan, das sich in einfacher Weise ohne Anderung des Produktionsablaufes durchführen läßt und im Vergleich zu den bisher bekannten Verfahren eine höhere Wirtschaftlichkeit erlaubt. Es war daher Aufgabe der vorliegenden Erfindung, ein derartiges Verfahren zur Verfügung zu stellen.

Gegenstand der vorliegenden Erfindung ist daher ein Verfahren zur Herstellung von porösen Gipskartonplatten, welches dadurch gekennzeichnet ist, daß man den im Schaumerzeuger befindlichen Produkten Tensid und Wasser 0,1 - 0,5 Gew.-Tle. Polyalkylwasserstoffsiloxan, bezogen auf 100 Gew.-Tle. Gipspulver zugibt.

Als Schäumertenside werden an sich bekannte Verbindungen, insbesondere aus der Stoffklasse der Alkylarylsulfate bzw. Alkylarylsulfonate verwendet, die durch ihre starken Schäumereigenschaften zur Porenbildung beitragen.

Die Tensidkonzentration im Schaumerzeuger beträgt etwa 0,1 - 0,5 Gew.-Tle., bezogen auf 100 Cew.-Tle. Gipspulver.

Es hat sich überraschenderweise herausgestellt, daß die in dem Schaumerzeuger ausgesprochen niedrige Tensidkonzentration ausreichend ist, Polyalkylwasserstoffsiloxan im Wasser zu emulgieren und dieser Emulsion eine ausreichende Stabilität zu verleihen, die erforderlich ist, um das emulgierte Siliconöl gleichmäßig im Gipsbrei zu verteilen. Schaumvolumen und Porengröße des Schaums werden durch Zugabe des Polyalkylwasserstoffsiloxans im Schaumerzeuger nicht nachteilig beeinflußt. Dies ist um so überraschender, da bekannt ist, daß Siliconöle als Entschäumer wirken und den Schaum zerstören.

Als Schaumerzeuger eignen sich entsprechende, an sich bekannte Geräte, wie Ceneratoren, Schnellrührer usw., die es erlauben, auf einfache Weise Schäume zu erzeugen.

Die nach dem erfindungsgemäßen Verfahren hergestellten Gipsformkörper, vornehmlich porösen Gipskartonplatten, zeigen ausgezeichnete wasserabweisende Eigenschaften.

Geeignete Mittel für das erfindungsgemäße Verfahren sind Polyalkylwasserstoffsiloxane, bevorzugt Polymethylwasserstoffsiloxane mit einer Viskosität von 10 - 50 cP/25° C.

Die wasserabweisende Wirkung der nach dem erfindungsgemäßen Verfahren hergestellten porösen Gipskartonplatten tritt unmittelbar nach dem Erhärten des Gipses ein. Nachteilige Eigenschaften auf Biegefestigkeit, Druckfestigkeit und Gewicht der Platten sind nicht zu beobachten.

Der Gegenstand der vorliegenden Erfindung soll nun anhand der folgenden Beispiele noch näher erläutert werden. Die Angabe "Teile" in den folgenden Beispielen bezieht sich auf Gewichtsteile.

**Beispiel 1**

150 Tle. Wasser, 1 Tl. Ethersulfat ("Zeliquid LP 2") und 1,5 Tle. eines Polymethylwasserstoffsiloxans der Viskosität 15 cP/25° C werden in einem Schaumerzeuger bei 1200 U/Min. miteinander vermischt. Der auf die beschriebene Weise erhaltene Tensid-Silicon-Schaum wird 700 Tln. eines wäßrigen Gipsbreis, bestehend aus 200 Tle. Wasser und 500 Tle. Gipspulver, das 94,5 % Calziumsulfat, 5 % Verunreinigungen und 0,5 % Abbindeverzögerungs- und Verdicktungsmittel enthält, zugesetzt. Die Mischzeit beträgt 5 sec. bei 400 U/Min. Die auf diese Weise erhaltene Mischung wird in eine Metallschale gegossen Nach einem Zeitraum von 48 Stunden wird die Wasseraufnahme im Tauchtest bestimmt. Dazu wird die erhaltene poröse Gipsscheibe 2 Stunden lang in ein Wasserbad gelegt. Nach dieser zweistündigen Wässerung zeigt die Gipsscheibe eine Wasseraufnahme von 6 Gew.-%.

**Beispiel 2** (Vergleich)

Ersetzt man in Beispiel 1 das Polymethylwasserstoffsiloxan durch Wasser und verfährt wie in Beispiel 1 beschrieben, erhält man Produkte, die nach Wässerung eine Gewichtszunahme von 39 Gew.-% zeigen.

**Beispiel 3** (Vergleich)

Gibt man die Menge des in Beispiel 1 beschriebene Polymethylwasserstoffsiloxans direkt dem wäßrigen Gipsbrei zu und verfährt, wie in Beispiel 1 beschrieben, erhält man Produkte, die nach Wässerung eine Gewichtszunahme von 39 Gew.-% zeigen.

**Beispiel 4** (Vergleich)

Erhöht man in Beispiel 1 die Zugabe des Polmethylwasserstoffsiloxans auf 5 Tle., gibt diese Ölmenge direkt dem wäßrigen Gipsbrei zu und verfährt, wie in Beispiel 1 beschrieben, erhält man Produkte, die nach Wässerung eine Gewichtszunahme von 37 Gew.-% zeigen.

**Beispiel 5**

Erniedrigt man in Beispiel 1 die Zugabemenge des Polymethylwasserstoffsiloxans auf 1 Tl. und verfährt, wie in Beispiel 1 beschrieben, erhält man Produkte, die nach Wässerung eine Gewichtszunahme von 9 Gew.-% zeigen.

**Patentansprüche**

1. Verfahren zur Herstellung wasserabweisender, poröser Gipsformkörper durch Behandlung mit Alkylwasserstoffpolysiloxanen, dadurch gekennzeichnet, daß man aus Wasser, Tensid und Polyalkylwasserstoffsiloxan einen Schaum erzeugt und diesen Schaum dem wäßrigen Gipsbrei, bestehend aus Anmachwasser, Gipspulver sowie gegebenenfalls weiteren üblichen Zusatzen, zugibt.

2. Verfahren nach Anspruch 1, dadurch gekennzeichnet, daß man 0,1 - 0,5 Gew.-Tle. Polymethylwasserstoffsiloxan - bezogen auf 100 Gew.-Tle. Gipspulver, einsetzt.

3. Gipsformkörper, dadurch gekennzeichnet, daß sie nach einem Verfahren gemäß Anspruch 1 oder 2 hydrophobiert wurden.

**Claims**

1. Process for the production of water-repellent, porous gypsum mouldings by treatment with alkylhydrogenpolysiloxanes, characterized in that a foam is produced from water, surfactant and polyalkylhydrogensiloxane and this foam is added to the aqueous gypsum paste consisting of mixing water, gypsum powder and, if appropriate, other customary additives.

2. Process according to Claim 1, characterised in that 0,1 - 0,5 parts by weight of polymethylhydrogensiloxane -based on 100 parts by weight of gypsum powder, are used.

3. Gypsum mouldings, characterised in that they have been rendered hycrophobic by a process according to Claim 1 or 2.

**Revendications**

1. Procédé pour la fabrication de corps moulés de plâtre poreux, hydrofuges par traitement par des alkylhydrogénopolysiloxanes, caractérisé en ce que l'on produit une mousse à partir d'eau, de tensioactif et de polyalkylhydrogénosiloxane et on ajoute cette mousse dans la pâte aqueuse de plâtre consistant en eau de gâchage, poudre de plâtre et eventuellement d'autres additifs habituels.

2. Procédé selon la revendication 1, caractérisé en ce que l'on utilise 0,1 - 0,5 partie en poids de polyméthylhydrogénosiloxane pour 100 parties en poids de poudre de plâtre.

3. Corps moulés de plâtre, caractérisés en ce qu'ils ont été hydrofugés par un procédé selon la revendication 1 ou 2.